# EUROPEAN PATENT SPECIFICATION

(11) **EP 2 818 038 B1**
(45) Date of publication and mention of the grant of the patent: **12.09.2018**
(21) Application number: 14173670.2
(22) Date of filing: 24.06.2014
(51) Int. Cl.: A01G 9/02

(54) **Plant pot**
Pflanzentopf
Pot

(30) Priority: 26.06.2013 NL 2011041
(43) Date of publication of application: 31.12.2014
(73) Proprietor: Desch Plantpak B.V., 5145 PC Waalwijk (NL)
(72) Inventor: De Jong, Hendrik, 2975 BE Ottoland (NL)
(74) Representative: Algemeen Octrooi- en Merkenbureau B.V.

(56) References cited:
- EP-A1- 1 862 063
- EP-A1- 2 499 903
- CH-A- 370 975
- DE-A1- 4 000 950
- DE-U1-202007 014 037
- NL-C2- 1 024 651

## Description

The present invention relates to a plant pot according to the preamble of claim 1. The at least one opening allows the water to escape from the plant pot in the case there is an excess of water, for instance because the substrate is saturated with water, as for instance may be the case following a shower or copious watering. Plant pots are also employed by growers. It is often the case here that drippers are placed in the centre of the substrate and thus feed water to the substrate from the upper side of the substrate in order to bring about plant growth. Surplus water then escapes from the plant pots via holes in the bottom. It is almost inevitable here that the escaping water also entrains nutrients present in the substrate, this in any case being undesirable from an environmental and economic viewpoint. In order to limit the water consumption and the consumption of nutrients in the substrates applied it is known to embody plant pots with raised openings. It is more specifically known for this purpose to make use of tubular parts connecting to the bottom of a plant pot. The open upper outer ends of the tubular parts form the openings via which surplus water can escape from the plant pot. Water can accumulate in the plant pot below the level of the openings and thereby remains longer in the plant pot, this resulting in a reduced water consumption. Such a plant pot is formed by the plant pot marketed by the company EPLA under the name "Anna". Alternatively, it is also known to make use of plant pots having a central raised bottom part in which holes are present. The water located below the level of the raised bottom part remains in the plant pot. It is also possible with a plant pot embodied in such a manner to make more sparing use of water. Such a plant pot is formed by the plant pot marketed by the company EPLA under the name "Jacinta".

A plant pot according to the preamble of claim 1 is known from European patent application EP 2499903 A1. The raised bottom part of this plant pot is flat. It is suggested in EP 2499903 A1 to provide the raised bottom part with weakened portions which may me punched through to allow water to flow there trough.

The present invention has for its object to provide a plant pot according to the preamble which on the one hand has a short cycle time during production thereof, and can hereby be produced relatively quickly and inexpensively, but which on the other is suitable for an efficient water management in use. The bottom has for this purpose a closed low bottom part and a bottom part raised relative to the low bottom part, wherein the low bottom part and the raised bottom part are connected to each other by means of a closed further standing wall, and at least one tubular part extending upward from the raised bottom part wherein the at least one opening is provided on the upper free outer end of the at least one tubular part. By applying such a combination of a raised bottom part with tubular parts connecting thereto in a plant pot, the tubular parts can on the one hand be given a relatively short form, this having a favourable effect on the cycle time, while the tubular parts moreover prevent water which comes to lie on the raised bottom part as it sinks into the substrate from flowing via or at least because of the raised bottom part directly into an opening. Owing to the use of the closed further standing wall efficient use can be made of the volume present on the inner side of the standing wall of the plant pot. It is expressly stated that, in the context of the present invention, the term tubular should also be understood to mean annular as a particular embodiment of tubular, i.e. the form of a relatively short tube. It is further expressly stated that it is not the intention with the term "tubular" to specify that the section of the relevant part has to be circular. Although a circular section is usually recommended, other sections, such as rectangular, are also possible within the context of the invention. It is also noted that the further standing wall is preferably also tubular. It is further noted that the term "closed" is understood mean that the relevant part of the plant pot to which the term "closed" relates according to the invention has no openings through which water could escape from the plant pot.

This latter risk is further limited, even when the tubular parts are relatively short and are in fact for instance annular parts, when the raised bottom part slopes downward in the direction of the periphery of the raised bottom part. This can be embodied in favourable manner when the raised bottom part comprises a convex surface from which the at least one tubular part extends. Water sinking into the substrate material will, in the case the water encounters the raised bottom part, tend because of the associated downward slope to deflect in the direction of the periphery of the raised bottom part where it is possible for the water to sink further to the level of the low bottom part. Because of the tubular parts the water will not be able to escape via the openings on the upper side of the tubular parts or, depending on the length of the tubular bottom parts and the quantity of water already present in the plant pot, will at least do so to lesser extent. This advantage is at least partially possible even if there were not at least one tubular part connecting to the raised bottom part. The present invention therefore also provides a plant pot comprising a bottom and a standing wall connecting to the bottom wherein at least one opening is provided in the bottom for drainage of water, wherein the bottom has a low bottom part and a bottom part raised relative to the low bottom part and wherein the raised bottom part slopes downward in the direction of the periphery of the raised bottom part, preferably in that the raised bottom part comprises a convex surface from which the at least one tubular part extends.

In order to make plant pots according to the invention nestable and also mutually releasable again, it is advantageous for the further standing wall to incline in the direction of the raised bottom part, preferably at an angle of inclination lying between 5 degrees and 30 degrees. A larger angle would detract to unnecessarily great extent from the capacity of the plant pot to buffer water.

In order to have drainage of water take place point-symmetrically relative to the centre of the bottom, the raised bottom part is preferably provided centrally relative to the low bottom part.

Surprisingly, it has been found that if both the low bottom part and the raised bottom part have a circular periphery it suffices for an adequate water drainage that the diameter of the raised bottom part is a maximum of 40%, more preferably a maximum of 35% of the diameter of the low bottom part. A relatively large amount of space is thus also provided for roots to grow in the substrate.

An adequate water drainage can also be realized when the bottom is provided with a number of, preferably three, tubular parts which extend upward from the raised bottom part and the respective upper outer ends of which form openings. This is more effective than a limitation to the use of only one tubular part per plant pot.

A simply embodied plant pot can be obtained when the diameter of the opening is equal to the inner diameter of the tubular part associated with the opening.

The diameter of the at least one opening preferably lies between 8 mm and 16 mm so that a good throughflow can be obtained if surplus water were to be present in the plant pot.

A sufficiently large buffer capacity can be obtained when the raised bottom part lies at least 5 mm above the low bottom part without it being necessary here to apply relatively long tubular parts.

In order to prevent water which sinks onto a raised bottom part from flowing directly from the raised bottom part into an opening, it is advantageous for the at least one tubular part to be at least 1 mm long. A shorter tubular part entails the real risk that the water will still flow over the upper edge of the tubular part.

The cycle time in the production of plant pots according to the invention can be limited particularly when the at least one tubular part is a maximum of 15 mm, more preferably a maximum of 10 mm long. Such short tubular parts are also favourable in respect of enabling growth of roots in the substrate.

The advantages of the invention, at least to the extent they relate to the production process of the plant pot, become particularly manifest when the plant pot is an injection-moulded product.

The invention will be further elucidated hereinbelow on the basis of the description of a preferred embodiment of a plant pot according to the invention with reference to the following figures:

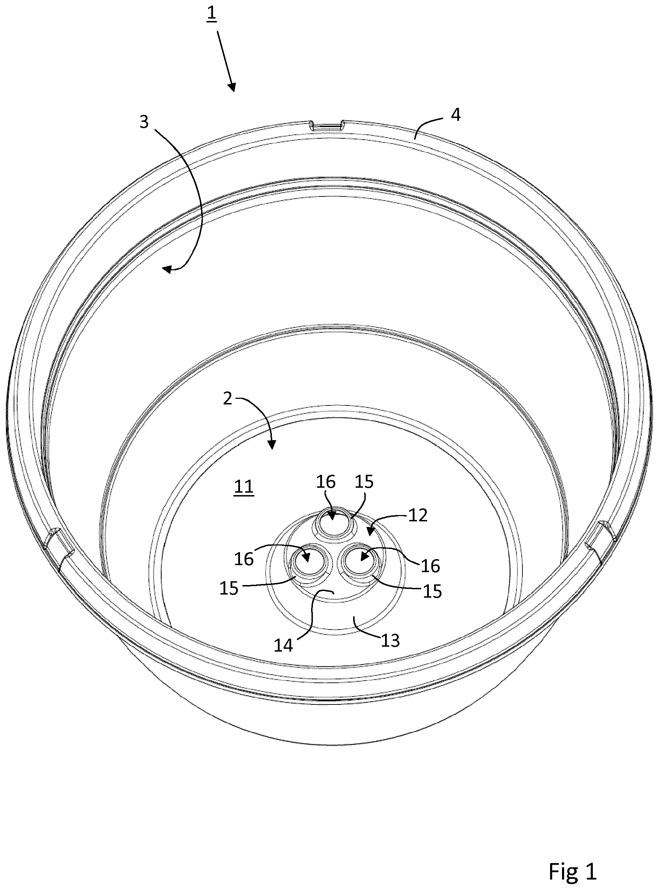

Figure 1 shows a perspective top view of a plant pot according to the invention;

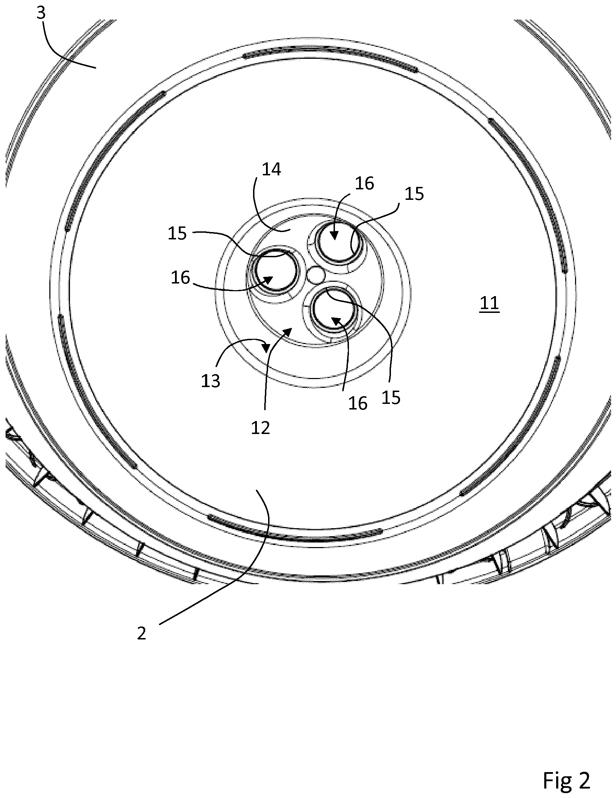

Figure 2 shows a perspective bottom view of the plant pot according to figure 1.

The plant pot 1 is an injection-moulded product of polypropylene and comprises a bottom 2 and an outward inclining circumferential standing wall 3 connecting to the circular periphery of bottom 2. The standing wall 3 has a profiled edge 4 on the upper side for the purpose of increasing the stiffness of the plant pot 1.

The plant pot 1 is distinguished from known plant pots in respect of the embodiment of the bottom 2. This is because the bottom 2 is provided with a low bottom part 11 with an annular, flat closed bottom surface and with a centrally located raised bottom part 12. The raised bottom part 12 is connected to the low bottom part 11 via a closed tubular further standing wall 13 with a height of about 20 mm and with an angle of inclination of about 8 degrees. Just as the low bottom part 11, the raised bottom part 12 has a circular periphery. The diameter of the raised bottom part 12 is about 25% of the diameter of the low bottom part 11. The raised bottom part 12 has a convex base surface 14. The bottom is provided point-symmetrically relative to the centre of the bottom part with three tubular parts 15 which connect to the raised bottom part 12 and which debouch in openings 16 at the respective upper outer ends thereof. The inner diameter of the tubular parts 15 and of the associated openings 16 is about 12 mm. During use of the plant pot 1, wherein it is filled with substrate, surplus water can flow out of the plant pot 1 via these openings 16. The height of the tubular parts 15 is limited to about 5 mm on the outer side of the raised bottom part 12. Because of the convex shape of the base surface 14 of the raised bottom part 12, the height of the tubular parts 15 on the sides thereof facing toward the centre of the raised bottom part 15 is small, i.e. about 2 mm.

The plant pot 1 can be produced in a relatively short cycle time by means of injection moulding. An extremely efficient use of water can be realized during use with the plant pot 1, wherein the upper circular edges of the tubular parts, which edges define the openings 16, form overflow edges for surplus water in the plant pot.

The invention is not limited to the embodiment as specified above with reference to the figures. Variants are possible within the scope of the following claims. In a possible variant the raised bottom part and the further standing wall transpose seamlessly into each other in that they are embodied in combined convex form. The diameter of the raised bottom part can be deemed as being the diameter of a circle which precisely encloses the at least one tubular part.

## Claims

1. A plant pot (1) comprising a bottom (2) and a standing wall (3) connecting to the bottom, wherein at least one opening is provided in the bottom for drainage of water, the bottom has a closed low bottom part (11) and a bottom part (12) raised relative to the low bottom part, wherein the low bottom part and the raised bottom part are connected to each other by means of a closed tubular further standing wall (13), **characterized in that** the plant pot also comprises at least one tubular part (15) extending upward from the raised bottom part wherein the at least one opening (16) is provided on the upper free outer end of the at least one tubular part.

2. The plant pot according to claim 1, **characterized in that** the raised bottom part slopes downward in the direction of the periphery of the raised bottom part.

3. The plant pot according to claim 2, **characterized in that** the raised bottom part comprises a convex surface from which the at least one tubular part extends.

4. The plant pot according to any of the foregoing claims, **characterized in that** the further standing wall inclines in the direction of the raised bottom part.

5. The plant pot according to claim 4, **characterized in that** the further standing wall inclines at an angle of inclination lying between 5 degrees and 30 degrees in the direction of the raised bottom part.

6. The plant pot according to any of the foregoing claims, **characterized in that** the raised bottom part is provided centrally relative to the low bottom part.

7. The plant pot according to any of the foregoing claims, **characterized in that** both the low bottom part and the raised bottom part have a circular periphery wherein the diameter of the raised bottom part is a maximum of 40%, more preferably a maximum of 35% of the diameter of the low bottom part.

8. The plant pot according to any of the foregoing claims, **characterized in that** the bottom is provided with a number of, preferably three, tubular parts which extend upward from the raised bottom part.

9. The plant pot according to any of the foregoing claims, **characterized in that** the diameter of the opening is equal to the inner diameter of the tubular part associated with the opening.

10. The plant pot according to any of the foregoing claims, **characterized in that** the diameter of the opening lies between 8 mm and 16 mm.

11. The plant pot according to any of the foregoing claims, **characterized in that** the raised bottom part lies at least 5 mm above the low bottom part.

12. The plant pot according to any of the foregoing claims, **characterized in that** the at least one tubular part is at least 1 mm long.

13. The plant pot according to any of the foregoing claims, **characterized in that** the at least one tubular part is a maximum of 15 mm, more preferably a maximum of 10 mm long.

14. The plant pot according to any of the foregoing claims, **characterized in that** the plant pot is an injection-moulded product.

## Patentansprüche

1. Pflanzentopf (1) mit einem Boden (2) und einer stehenden Wand (3), die mit dem Boden verbundenen ist, wobei in dem Boden mindestens eine Öffnung zur Entwässerung von Wasser vorgesehen ist, wobei der Boden einen geschlossenen unteren Bodenteil (11) und einem gegenüber dem unteren Bodenteil erhöhten Bodenteil (12) umfasst, wobei der untere Bodenteil und der erhöhte Bodenteil mittels einer geschlossenen rohrförmigen weiteren stehenden Wand (13) miteinander verbunden sind, **dadurch gekennzeichnet, dass** der Pflanzentopf auch mindestens einen rohrförmigen Teil (15) umfasst, der sich von dem erhöhten Bodenteil nach oben erstreckt, wobei die mindestens eine Öffnung (16) an dem oberen freien äußeren Ende des mindestens einen rohrförmigen Teils vorgesehen ist.

2. Pflanzentopf nach Anspruch 1, **dadurch gekennzeichnet, dass** der erhöhte Bodenteil in Richtung des Umfangs des erhöhten Bodenteils nach unten abfällt.

3. Pflanzentopf nach Anspruch 2, **dadurch gekennzeichnet, dass** der erhöhte Bodenteil eine konvexe Oberfläche aufweist, von der sich der wenigstens eine rohrförmige Teil erstreckt.

4. Pflanzentopf nach einem der vorhergehenden Ansprüche, **dadurch gekennzeichnet, dass** die weitere stehende Wand in Richtung zu dem erhöhten Bodenteil geneigt ist.

5. Pflanzentopf nach Anspruch 4, **dadurch gekennzeichnet, dass** die weitere stehende Wand in einem Neigungswinkel zwischen 5 Grad und 30 Grad in Richtung des erhöhten Bodenteils geneigt ist.

6. Pflanzentopf nach einem der vorhergehenden Ansprüche, **dadurch gekennzeichnet, dass** der erhöhte Bodenteil mittig zu dem unteren Bodenteil vorgesehen ist.

7. Pflanzentopf nach einem der vorhergehenden Ansprüche, **dadurch gekennzeichnet, dass** sowohl der untere Bodenteil als auch der erhöhte Bodenteil einen kreisförmigen Umfang aufweisen, wobei der Durchmesser des erhöhten Bodenteils maximal 40%, bevorzugt maximal 35%, des Durchmessers des unteren Teils ist.

8. Pflanzentopf nach einem der vorhergehenden Ansprüche, **dadurch gekennzeichnet, dass** der Boden mit einer Anzahl von, vorzugsweise drei, rohrförmigen Teilen versehen ist, die sich von dem erhöhten Bodenteil nach oben erstrecken.

9. Pflanzentopf nach einem der vorhergehenden Ansprüche, **dadurch gekennzeichnet, dass** der Durchmesser der Öffnung gleich dem Innendurchmesser des der Öffnung zugeordneten rohrförmigen Teils ist.

10. Pflanzentopf nach einem der vorhergehenden Ansprüche, **dadurch gekennzeichnet, dass** der Durchmesser der Öffnung zwischen 8 mm und 16 mm liegt.

11. Pflanzentopf nach einem der vorhergehenden Ansprüche, **dadurch gekennzeichnet, dass** der erhöhte Bodenteil mindestens 5 mm über dem unteren Bodenteil liegt.

12. Pflanzentopf nach einem der vorhergehenden Ansprüche, **dadurch gekennzeichnet, dass** der mindestens eine rohrförmige Teil mindestens 1 mm lang ist.

13. Pflanzentopf nach einem der vorhergehenden Ansprüche, **dadurch gekennzeichnet, dass** der wenigstens eine rohrförmige Teil maximal 15 mm, bevorzugt maximal 10 mm, lang ist.

14. Pflanzentopf nach einem der vorhergehenden Ansprüche, **dadurch gekennzeichnet, dass** der Pflanzentopf ein Spritzgussprodukt ist.

## Revendications

1. Pot à plantes (1) comprenant un fond (2) et une paroi verticale (3) se reliant au fond, où au moins une ouverture est prévue au fond pour l'évacuation de l'eau, le fond a une partie de fond inférieure fermée (11) et une partie de fond (12) surélevée par rapport à la partie de fond inférieure, où la partie de fond inférieure et la partie de fond surélevée sont reliées l'une à l'autre au moyen d'une autre paroi verticale tubulaire fermée (13), **caractérisé en ce que** le pot à plantes comprend également au moins une partie tubulaire (15) s'étendant vers le haut à partir de la partie de fond surélevée où l'au moins une ouverture (16) est prévue sur l'extrémité externe libre supérieure de l'au moins une partie tubulaire.

2. Pot à plantes selon la revendication 1, **caractérisé en ce que** la partie de fond surélevée s'incline vers le bas dans la direction de la périphérie de la partie de fond surélevée.

3. Pot à plantes selon la revendication 2, **caractérisé en ce que** la partie de fond surélevée comprend une surface convexe à partir de laquelle s'étend l'au moins une partie tubulaire.

4. Pot à plantes selon l'une des revendications précédentes, **caractérisé en ce que** l'autre paroi verticale s'incline dans la direction de la partie de fond surélevée.

5. Pot à plantes selon la revendication 4, **caractérisé en ce que** l'autre paroi verticale s'incline selon un angle d'inclinaison compris entre 5 degrés et 30 degrés dans la direction de la partie de fond surélevée.

6. Pot à plantes selon l'une des revendications précédentes, **caractérisé en ce que** la partie de fond surélevée est prévue au centre par rapport à la partie de fond inférieure.

7. Pot à plantes selon l'une des revendications précédentes, **caractérisé en ce que** la partie de fond inférieure et la partie de fond surélevée ont une périphérie circulaire où le diamètre de la partie de fond surélevée est un maximum de 40%, plus préférablement un maximum de 35% du diamètre de la partie de fond inférieure.

8. Pot à plantes selon l'une des revendications précédentes, **caractérisé en ce que** le fond est pourvu d'un certain nombre, de préférence trois, de parties tubulaires qui s'étendent vers le haut à partir de la partie de fond surélevée.

9. Pot à plantes selon l'une des revendications précédentes, **caractérisé en ce que** le diamètre de l'ouverture est égal au diamètre interne de la partie tubulaire associée à l'ouverture.

10. Pot à plantes selon l'une des revendications précédentes, **caractérisé en ce que** le diamètre de l'ouverture est compris entre 8 mm et 16 mm.

11. Pot à plantes selon l'une des revendications précédentes, **caractérisé en ce que** la partie de fond surélevée est située au moins à 5 mm au-dessus de la partie de fond inférieure.

12. Pot à plantes selon l'une des revendications précédentes, **caractérisé en ce que** l'au moins une partie tubulaire a une longueur d'au moins 1 mm.

13. Pot à plantes selon l'une des revendications précédentes, **caractérisé en ce que** l'au moins une partie tubulaire a un maximum de 15 mm, plus préférablement une longueur maximale de 10 mm.

14. Pot à plantes selon l'une des revendications précédentes, **caractérisé en ce que** le pot à plantes est un produit moulé par injection.
